# EUROPÄISCHE PATENTSCHRIFT

(11) **EP 3 271 991 B1**
(45) Veröffentlichungstag und Bekanntmachung des Hinweises auf die Patenterteilung: **08.05.2019**
(21) Anmeldenummer: 15712580.8
(22) Anmeldetag: 19.03.2015
(51) Int. Cl.: H02J 7/00, B25F 5/02, B25H 3/02, B25F 5/00

(54) **WERKZEUGKOFFER MIT KOFFERUNTERTEIL UND KOFFERDECKEL**
TOOL CASE COMPRISING CASE BOTTOM AND CASE LID
COFFRE À OUTILS POURVU D'UNE PARTIE COFFRE INFÉRIEURE ET D'UN COUVERCLE

(43) Veröffentlichungstag der Anmeldung: 24.01.2018
(73) Patentinhaber: Vorwerk & Co. Interholding GmbH, 42275 Wuppertal (DE)
(72) Erfinder: HOFFMANN, Sabrina, 42653 Solingen (DE); MEGGLE, Martin, 33442 Herzebrock (DE); ZUBER, Daniel, 42111Wuppertal (DE)
(74) Vertreter: Müller, Enno
(86) Internationale Anmeldenummer: PCT/EP2015/055795
(87) Internationale Veröffentlichungsnummer: WO 2016/146194

(56) Entgegenhaltungen:
- WO-A1-2013/075942
- US-A1- 2005 083 014
- US-A1- 2005 200 331
- US-A1- 2013 132 742
- US-A1- 2014 184 163
- US-A1- 2014 266 024

## Beschreibung

Die Erfindung betrifft einen Werkzeugkoffer mit einem Kofferunterteil und einem Kofferdeckel, wobei das Kofferunterteil und/oder der Kofferdeckel mindestens eine Halterungsaufnahme für mindestens ein Handwerkzeug aufweist, wobei der Werkzeugkoffer mindestens eine Ladestation zur Ladung mindestens eines Akkumulators des Handwerkzeugs aufweist.

Zu derartigen Werkzeugkoffern wird bspw. auf die DE-A1-10 2012 111 328 und DE-A1-10 2012 111 321 verwiesen. Bei einem solchen Werkzeugkoffer steht das gewünschte Werkzeug nicht immer mit einem gewünschten Ladezustand des Akkumulators zur Verfügung. Die Benutzung des Werkzeugkoffers bzw. einzelner Werkzeuge hieraus kann entsprechend beeinträchtigt sein.

Aus der WO 2013/075942 A1 ist eine Handwerkzeugakkumulatorladevorrichtung bekannt, auf welche ein Werkzeugkoffer, der selbst keine Ladevorrichtung aufweist, zur Aufladung von in dem Werkzeugkoffer befindlichen Akkumulatoren aufsetzbar ist. Weiter ist es für das Aufladen von Akkumulatoren allgemein aus der US 2013/0132742 A1 bekannt, eine Ladung des Akkumulators in Abhängigkeit von den Akkumulator selbst betreffenden Parametern wie beispielsweise Anzahl der bisherigen Ladevorgänge, Ladezeit seit Beginn der Ladung, Ladezeit bis zum Erreichen einer vorgegebenen Spannung etc., mit höherem oder geringerem Ladestrom vorzunehmen.

Ausgehend von dem dargelegten Stand der Technik ist es Aufgabe der Erfindung, einen derartigen Werkzeugkoffer im Hinblick auf den Ladezustand der Akkumulatoren zu optimieren.

Diese Aufgabe ist beim Gegenstand des Anspruches 1 dadurch gelöst, dass die Ladestation eingerichtet ist, die Dauer des Ladevorgangs des Akkumulators, d. h. die Ladezeit, in Abhängigkeit von einer Bewegung des Werkzeugkoffers oder zumindest Teilen des Werkzeugkoffers zwischen einer Schnellladung, einer Ladung mit Standardlaufzeit oder einer Schon- und Enthaltungsladung, wobei auch Zwischenstufen einstellbar vorgesehen sind, zu variieren.

Die Schnellladung ist eine Ladung mit einer Ladezeit, die geringer ist als eine herstellerseitig vorgegebene Standardladezeit. Die Standardladezeit hängt von dem aktuellen Ladezustand des Akkumulators sowie Ladeparametern wie Ladestrom, Pulsdauer der Strompulse sowie Pulsfrequenz der Strompulse ab. Eine Standardladezeit bei einem vollständig entladenen Akkumulator kann beispielsweise vier Stunden betragen, während eine Ladezeit für eine Schnellladung demgegenüber beispielsweise nur eine halbe Stunde beträgt. Die Ladezeit für eine Schon- und Erhaltungsladung sollte entsprechend länger sein als die Standardladezeit.

Eine Schnellladung kann beispielsweise mit vordefinierten Ladeparametern wie einem möglichst hohen Ladestrom und/oder einer großen Pulsfrequenz und/oder einer langen Pulsdauer der Strompulse durchgeführt werden. Dabei ist zu beachten, dass keine Überlastung, insbesondere Überhitzung des Akkumulators eintritt.

Bei einem Ladevorgang mit Standardladezeit wird beispielsweise mit einem Ladestrom und/oder einer Pulsfrequenz und/oder einer Pulsdauer gearbeitet, welche unterhalb der unter Beachtung vorstehender Kriterien möglichen Grenzwerte angesiedelt ist. Die für eine vollständige Aufladung der Akkumulatoren erforderliche Ladezeit ist bei einer Schnellladung besonders bevorzugt kürzer als bei einem Ladevorgang mit Standardladezeit. Bei einer Schon- und Erhaltungsladung wird mit vergleichsweise niedrigen Ladeparametern gearbeitet, die einen gegenüber dem Ladevorgang mit Standardladezeit (üblicher Ladevorgang) nochmals langsameren Ladevorgang verursachen oder einen geladenen oder nahezu geladenen Akkumulator langsam (schonend) in den Zustand einer vollständigen Ladung bringen oder in diesem Zustand der vollständigen Ladung halten.

Der Ladevorgang in Abhängigkeit einer Bewegung des Werkzeugkoffers oder zumindest Teilen des Werkzeugkoffers, als Schnellladung, Standardladung oder Schon- und Erhaltungsladung lässt erreichen, dass eine möglichst benutzergerechte Ladung des einen Akkumulators oder ggf. von mehreren Akkumulatoren erreicht wird.

Die Aktivierung einer Schnellladung kann erfolgen, auch wenn der Ladezustand des Akkumulators einen vorgesehenen Schwellenwert bzw. Ladezustand noch nicht unterschritten hat, ab welchem Schwellenwert eine Ladung des Ackumulators aktiviert wird.

Hinsichtlich der Bewegung des Werkzeugkoffers können verschiedene Parameter zur Einstellung des Ladevorgangs genutzt werden. Beispielsweise kann durch eine, etwa durch einen Bewegungssensor erfasste Bewegung des Werkzeugkoffers eine Schnellladung ausgelöst werden oder durch Eintreten einer Ruhephase des Werkzeugkoffers eine Schnellladung in einen Ladevorgang mit üblicher Ladezeit gewandelt werden. Nicht zuletzt kann auch die Handhabung von einzelnen Teilen des Werkzeugkoffers, etwa des Kofferdeckels, als auslösendes Ereignis für einen bestimmten einzustellenden Ladevorgang, beispielsweise einer Schnellladung herangezogen werden. Ein bestimmter einzustellender Ladevorgang zeichnet sich dabei durch bestimmte, insbesondere vordefinierte, Ladeparameter aus. Durch einen Benutzereingriff, der sich nicht schon durch die genannte mögliche Bewegung des Werkzeugkoffers äußert, kann auch gezielt ein bestimmter einzustellender Ladevorgang eines oder mehrerer Akkumulatoren eingestellt werden. Dies ist weiter unten noch ergänzend erläutert.

Es empfiehlt sich, dass die Ladestation eingerichtet derart ist, dass mindestens ein Akkumulator zeitlich vorrangig geladen wird. Zweckmäßigerweise sind zumindest zwei Akkumulatoren in jeweils einer Ladestation positioniert.

Hierdurch kann erreicht werden, dass in dem Werkzeugkoffer diejenigen Ackumulatoren oder die Handwerkzeuge vorrangig geladen werden, die durch einen Benutzer gewählt wurden oder etwa empirisch durch ein Benutzungsprotokoll als vorrangig bestimmt wurden. Ein Benutzungsprotokoll kann durch den Werkzeugkoffer selbst, einen diesbezüglichen Mikroprozessor oder sonstige Intelligenz erstellt werden.

Soweit vor- und nachstehend Akkumulatoren angesprochen sind, kann es sich um von den Handwerkzeugen lösbare Akkumulatoren handeln, die gesondert in eine Ladestation eingesteckt sind oder trotz der Lösbarkeit zusammen mit dem Handwerkzeug in eine Ladestation eingesteckt sind. Es kann sich um Ackumulatoren handeln, die ohne Zerstörung nicht lösbar mit einem Handwerkzeug verbunden sind, so dass hierdurch zwingend vorgegeben ist, dass sich bei der Anordnung eines Akkumulators in der Ladestation das gesamte Handwerkzeug in der Ladestation befindet.

Der Werkzeugkoffer kann eine oder mehrere Ladestationen aufweisen.

Vorteilhaft kann der Werkzeugkoffer einen Schalter zur Veranlassung eines vorrangigen Ladevorgangs eines Akkumulators aufweisen. Die Einstellung der Ladezeit kann hinsichtlich eines Benutzereingriffs insbesondere durch Betätigen, bspw. Umlegen eines Schalters erfolgen. Es kann sich um denselben Schalter handeln, der für die Veranlassung einer vorrangigen Ladung vorgesehen ist. Es kann sich auch um einen weiteren Schalter handeln.

Es kann auch ein bevorzugt in dem Werkzeugkoffer selbst angeordneter Sensor vorgesehen sein, dessen Sensorsignal eine Einstellung der Ladezeit hervorrufen kann. Beispielsweise kann der Sensor so ausgebildet sein, dass er eine Erschütterung des Werkzeugkoffers, bspw. ein Klopfen oder Treten gegen den Werkzeugkoffer, erfasst. In Abhängigkeit hiervon, wobei auch unterschiedliche Erschütterungen sensormäßig unterscheidbar sein können, kann die Einstellung der Ladezeit erfolgen.

Eine Einstellung eines bestimmten einzustellenden Ladevorgangs kann auch abhängig von einem oder mehreren vorbestimmten Ereignissen erfolgen. Bei einem bestimmten Ladevorgang handelt es sich vorzugsweise um die Schnellladung, den Ladevorgang mit Standardladezeit oder die Schon- und Erhaltungsladung. Ein vorbestimmtes Ereignis kann etwa das Öffnen des Werkzeugkoffers sein. Zur Auslösung eines bestimmten Ladevorgangs mit dementsprechend bestimmten Ladeparametern kann im Einzelnen auch ein Lösen einer Rast oder das Öffnen eines Schlosses herangezogen sein.

Beispielsweise kann auch das Aufschwenken des Kofferdeckels, ggf. über einen vorbestimmten Winkel hinaus, als auslösendes Ereignis für eine Schnellladung und/oder ein vorrangiges Laden eines Akkumulators festgelegt sein.

Eine bestimmte Ladezeit kann auch abhängig sein von einer - oftmals nicht unerheblichen - Zeitspanne, welche zum Zeitpunkt eines Öffnungsvorgangs des Werkzeugkoffers beginnt und bis zum tatsächlichen Arbeitseinsatz des Handwerkzeugs reicht.

Das vorbestimmte Ereignis kann auch ergänzend oder alternativ das Schließen des Werkzeugkoffers sein. Auch hierbei kann bspw. auf das Einschnappen einer Rast oder eines Schlosses zwischen dem Kofferdeckel und dem Kofferunterteil konkret abgestellt sein. Es kann auch in diesem Zusammenhang vorgesehen sein, dass der Werkzeugkoffer zunächst über einen längeren, vorbestimmten Zeitraum geschlossen bleiben muss, bis ein bestimmter Ladevorgang, sei es eine Schnellladung, eine Ladung mit Standardladezeit oder eine Schon- und Erhaltungsladung, einsetzt.

Insofern kann die Einstellung des Ladevorgangs auch an den Zustand des Werkzeugkoffers als solchen gebunden sein. Ob es sich etwa um einen niedergelegten (auf einer Breitfläche aufliegenden) oder aufrecht stehenden (auf einer Schmalfläche aufstehenden) Werkzeugkoffer handelt. Hierzu kann der Werkzeugkoffer einen bevorzugt durch die Intelligenz des Werkzeugkoffers selbst auswertbaren Lagesensor aufweisen. Der Lagesensor kann in einfacher Weise bspw. durch ein in den Werkzeugkoffer integriertes oder darin ausgebildetes Wasserwaagenteil gegeben sein. Der Werkzeugkoffer muss allgemein und auch in diesem Zusammenhang nicht tatsächlich eine Breit- und eine Schmalseite aufweisen. Er kann auch bspw. kubusförmig gestaltet sein. Eine einen bestimmten einzustellenden Ladevorgang hervorrufende Lage des Werkzeugkoffers kann im Hinblick auf eine der Seiten des Werkzeugkoffers definiert sein.

Ein vorrangiges Laden eines bestimmten Akkumulators oder mehrerer Akkumulatoren gegenüber einem oder mehreren weiteren Akkumulatoren, die insgesamt an die eine Ladestation oder an mehrere Ladestationen angeschlossen sind, kann durch eine Rangfolge vorgegeben sein. Zunächst kann die Ladestation eingerichtet sein, eine zeitliche Rangfolge der Ladevorgänge in Abhängigkeit von gemessenen Ladezuständen selbsttätig herzustellen. Ein Ladezustand ist beispielsweise durch den Prozentsatz der Ladung definiert, den der momentane Ladezustand gegenüber einem vollständig geladenen Zustand des Akkumulators aufweist. Eine zeitliche Rangfolge kann auch durch einen Benutzereingriff vorgegeben werden, wobei dann durch den Benutzer eine Übergehung der bei der selbsttätigen Auslösung vorgesehenen Rangfolge erfolgt.

Die Rangfolge kann bei der selbsttätigen Auslösung zunächst durch einen detektierbaren Ladezustand der Akkumulatoren insgesamt, oder nur der für das vorrangige Laden vorgesehenen Akkumulatoren, vorgegeben sein. Der oder die Akkumulatoren, welche die geringste Ladung aufweisen, können vorrangig geladen werden. Alternativ hierzu kann vorgesehen sein, dass insbesondere der oder die am häufigsten benutzten Akkumulatoren vorrangig geladen werden.

Auch ist vorgesehen, dass ein jeweiliger Ladezustand eines Akkumulators, insbesondere zumindest eines Akkumulators, der schnellladbar ist, feststellbar ist. Die Feststellbarkeit kann etwa durch Messen des Ladestroms erreicht sein.

Der Akkumulator oder ein zugehöriges Werkzeug kann ein Mittel zur Aufzeichnung von Benutzungsvorgängen aufweisen. Diese Aufzeichnung kann in der Ladestation auslesbar und ggf. durch eine in dem Werkzeugkoffer angeordnete Auswerteeinheit auswertbar sein. Die Auswerteeinheit kann insbesondere einen Mikroprozessor umfassen, um programmgesteuert eine derartige Auswertung vorzunehmen.

Die Benutzungsvorgänge und/oder sonstige Daten der Handwerkzeuge in dem Werkzeugkoffer können auch an eine Anzeigeeinheit des Werkzeugkoffers weitergegeben werden und dem Benutzer, ggf. in geeigneter Aufarbeitung, bspw. grafischer Darstellung, zur Kenntnis gebracht werden. Sie können über eine Kommunikationsschnittstelle aus dem Werkzeugkoffer ausgelesen werden oder an ein Kommunikationsgerät außerhalb des Werkzeugkoffers, ggf. über eine Funkverbindung, übertragen werden. Die Übertragung kann zum Zwecke der Auswertung erfolgen und/oder zum Zwecke der Darstellung.

Sonstige Daten können bspw. erfasste Spitzen einer Kraftbelastung, ein Zeitraum seit einer letzten Überprüfung eines Werkzeuges oder eines Akkumulators durch eine Werkstatt oder auch die Anzahl der durchgeführten Überprüfungen insgesamt sein.

Der Werkzeugkoffer kann ein Mittel zur Messung der räumlichen Lage des Werkzeugkoffers und/oder eines Teils des Werkzeugkoffers aufweisen. Dabei kann eine Lage des Werkzeugkoffers oder eines Teils des Werkzeugkoffers relativ zu einem anderen Teil des Werkzeugkoffers zur Auslösung eines vorrangigen Ladevorgangs eines oder mehrerer Akkumulatoren detektierbar sein. Ein Teil des Werkzeugkoffers kann bspw. ein Kofferdeckel sein, wobei das andere Teil das Kofferunterteil sein kann. Entsprechend kann zwischen einem geöffneten oder einem geschlossenen Zustand unterscheidbar sein.

Hinsichtlich einer Einstellung der Ladezeit kann insbesondere auch ein Übergang von einer Schnellladung in eine Schon- oder Erhaltungsladung eingestellt werden. Dies selbsttätig oder auch durch einen Benutzereingriff.

Zur Ladung eines Akkumulators kann zunächst eine Netzverbindbarkeit des Werkzeugkoffers insgesamt, etwa über einen Netzstecker, vorgesehen sein. Es kann alternativ oder ergänzend die Ladeenergie eines weiteren Akkumulators zur Ladung eines oder mehrerer bestimmter Akkumulatoren in dem Werkzeugkoffer heranziehbar sein. Es kann sich hierbei um die Energie eines Akkumulators handeln, der zu einem in dem Werkzeugkoffer vorhandenen Werkzeug gehört. Beispielsweise eines Akkumulators, der entsprechend der aufgezeichneten Benutzungshäufigkeit nicht oder nur sehr selten benutzt wurde. Es kann sich um die Energie eines Hilfsakkumulators handeln, der nur zur Verfügungsstellung von Ladeenergie - ggf. zusätzlich zu sonstigen Akkumulatoren - in dem Werkzeugkoffer oder außerhalb des Werkzeugkoffers, ggf. dann über eine Lade-Schnittstelle mit dem Werkzeugkoffer verbindbar, vorhanden ist. Über den Hilfsakkumulator können entsprechend auch Ladevorgänge durchgeführt werden wenn der Werkzeugkoffer nicht an das elektrische Netz angeschlossen ist.

Der Werkzeugkoffer kann eine Kommunikationsschnittstelle zum Empfang von Signalen zur Veranlassung eines Ladevorgangs aufweisen. Die Kommunikationsschnittstelle kann allein oder zusätzlich zu einer an dem Werkzeugkoffer vorgesehenen Bedien- und/oder Anzeigeeinheit vorgesehen sein. Die Kommunikationsschnittstelle dient dazu, mit dem Kommunikationsgerät, das bevorzugt einen eigenen Mikroprozessor aufweist, und bspw. in Form eines Computers, Mobiltelefons, Smartphones oder Tablet-Computers außerhalb des Werkzeugkoffers vorliegt, in Kommunikation zu treten. Diese Kommunikation kann bidirektional auf kabelbezogenem oder drahtlosem Weg vorgesehen sein. Über das außerhalb des Werkzeugkoffers angeordnete Kommunikationsgerät kann mittels der Kommunikationsschnittstelle eine Einstellung der Ladezeit vorgenommen werden. Die Rangfolge der einzelnen Ladevorgänge und/oder der Wechsel zwischen verschiedenen Ladezeit, bspw. einer Schnellladung, einer Standardladung und einer Schon- und Erhaltungsladung, kann von einem Bediener individuell unter Nutzung der Kommunikationsschnittstelle bestimmt werden.

Mittels der Kommunikationsschnittstelle des Werkzeugkoffers, oder ggf. einer weiteren, zusätzlichen Kommunikationsschnittstelle des Werkzeugkoffers, können auch bevorzugt Geräusch-, Lage-, Gesten- oder sonstige Signale, die von einem Benutzer oder einem außerhalb des Werkzeugkoffers befindlichen Gerät, beispielsweise dem Kommunikationsgerät abgegeben werden, durch den Werkzeugkoffer erfasst und ausgewertet werden. Hierzu kann die Kommunikationsschnittstelle eine Kamera bzw. einen Lichtsensor (CCD-Zeile bspw.) aufweisen.

Die Kommunikationsschnittstelle des Werkzeugkoffers kann auch als USB-Schnittstelle ausgebildet sein. Durch Ankopplung von einem Computer etc. über die USB-Schnittstelle und/oder eine Ankopplung von Sensoren über die USB-Schnittstelle können die genannten Funktionen erzielt werden. Die Kommunikationsschnittstelle kann als WIFI-, IR- oder Bluetooth®-Schnittstelle ausgebildet sein. Es ist möglich, dass der Werkzeugkoffer zumindest eine USB-Schnittstelle und zumindest eine vorzugsweise weitere Kommunikationsschnittstelle für eine drahtlose Kommunikation mit dem Kommunikationsgerät aufweist.

Mittels der Ladestation können Diagnosedaten eines Werkzeugs abrufbar und/oder auswertbar sein. Diese Diagnosedaten, welche bspw. die insgesamt gegebene Benutzungszeit, die erzielten Drehzahlen und/oder die Häufigkeit der Benutzung etc. betreffen können, können zur Auswertung herangezogen werden.

In dem Werkzeugkoffer kann eine Aufnahme für Verbrauchsmaterialien wie Heftklammern, Nägel, Kunststoffstangen für Heißklebepistolen, Werkzeugeinsätze (Bits) oder dergleichen ausgebildet sein. Diese Verbrauchsmaterialien können hinsichtlich ihres Zustands und/oder ihrer Anzahl in der Aufnahme überprüfbar sein.

In dem Werkzeugkoffer können nur gleiche oder auch unterschiedliche Ladestationen vorgesehen sein, beispielsweise Ladestationen, die eine Schnellladung ermöglichen und/oder Ladestationen, die die Nutzung von in einem Akkumulator gespeicherter Energie zur Ladung eines weiteren Akkumulators ermöglichen.

Das Kommunikationsgerätkann außen oder innen an dem Werkzeugkoffer befestigbar sein. Das Kommunikationsgerät, das bevorzugt losgelöst von dem Werkzeugkoffer, etwa nach einer Trennung einer Halterungs- und/oder Schaltungsverbindung, nutzbar ist, kann mittels des Werkzeugkoffers hinsichtlich eines ggf. in dem Kommunikationsgerät vorgesehenen Akkumulators beispielsweise über Nutzung der USB-Schnittstelle aufladbar sein.

Es kann vorgesehen sein, dass die genannten Ladevorgänge ausschließlich über das Kommunikationsgerät steuerbar sind.

Die nach einer Ausführungsform durch das Auslesen der Akkumulatoren oder der Handwerkzeuge, etwa hinsichtlich Ladezustand, Benutzungshäufigkeit etc. erfassbaren Daten, können von dem Werkzeugkoffer auf das Kommunikationsgerät auf dem Wege einer Datenübermittlung übertragbar sein. Die Datenübermittlung kann kabelgebunden oder über Funk erfolgen.

Die Datenübermittlung kann in vorgegebenen oder vorgebbaren festen Zeitintervallen erfolgen. Die Datenübermittlung kann auch abhängig vom Ladezustand eines oder mehrerer oder gezielt ausgewählter Akkumulatoren bzw. Handwerkzeuge erfolgen. Die Datenübermittlung kann an einen Zustand des Werkzeugkoffers, wie etwa eine Deckelöffnung und/oder eine bestimmte Ausrichtung im Raum (Senkrechtstellung) als auslösendes Ereignis gebunden sein.

Insbesondere kann die Entnahmehäufigkeit einzelner Handwerkzeuge erfasst, ggf. ausgewertet und ggf. übertragen werden. Auf das Kommunikationsgerät kann eine Information darüber übertragen werden, welche Handwerkzeuge im Werkzeugkoffer vorhanden sind. Es können über das Kommunikationsgerät Arbeitsanweisungen aufgerufen oder erstellt werden. In gleicher Weise kann mittels des Kommunikationsgerätes beispielsweise auf Bedienungsanleitungen zurückgegriffen werden.

Nicht zuletzt können eine Servicewerkstatt oder ein Hersteller mittels eines solchen Kommunikationsgerätes, alternativ mittels des Werkzeugkoffers unmittelbar Diagnosedaten (Fehlerberichte) abrufen und übertragen. Gegebenenfalls kann der Benutzer selbst solche Diagnoseberichte und zugehörige Diagnosedaten nach Wunsch lesen und/oder auswerten und/oder an beispielsweise den Hersteller des Werkzeugkoffers und/oder des Werkzeugs bzw. der Werkzeuge übermitteln.

Das Kommunikationsgerät stellt vorzugsweise neben einer beispielsweise an dem Werkzeugkoffer angeordneten Bedien- und Anzeigeeinheit eine zweite Bedien- und Anzeigeeinheit dar. Die Bedien- und Anzeigeeinheiten können parallel benutzbar sein, wobei bevorzugt eine Hierarchieordnung zwischen diesen Bedien- und Anzeigeeinheiten vorgesehen ist. Das Kommunikationsgerät kann die alleinige Kommunikationsschnittstelle des Werkzeugkoffers darstellen.

Es kann grundsätzlich vorgesehen sein, dass eine Schnellladung dann in eine Schon- und Erhaltungsladung übergeht, wenn der Deckel des Werkzeugkoffers geschlossen wird oder über eine vorgegebene Zeitspanne geschlossen ist. Unabhängig hiervon ist ein Übergang in die Schon- und Erhaltungsladung bevorzugt vorgesehen, wenn ein Akkumulator einen vorgegebenen Ladezustand erreicht hat bzw. vollständig geladen ist.

Der Ladevorgang kann ausschließlich über das Kommunikationsgerät gesteuert werden.

Die Bedien- und Anzeigeeinheit an dem Werkzeugkoffer selbst kann, beispielsweise als Bildschirm, insbesondere LCD-Bildschirm, als Touchscreen-Bildschirm oder nur als Schalter mit einer einzelnen digitalen Anzeige ausgebildet sein.

In dem Werkzeugkoffer können unterschiedliche Handwerkzeuge, beispielsweise eine Heißklebepistole, ein Tacker, eine Bohrmaschine usw. vorhanden sein. Es kann sich insbesondere um Werkzeuge handeln, die mittels des Akkumulators elektromotorisch betrieben sind, und um weitere Werkzeuge, wie etwa eine Heißklebepistole, die keinen Motor aufweist.

Es kann vorgesehen sein, dass ein oder mehrere oder alle Handwerkzeuge mit dem Schließen des Deckels derart in die Ladestation gedrückt werden, dass eine Ladung erfolgen kann. Das Werkzeug kann bzw. die Werkzeuge können, bspw. durch Federwirkung oder Klemmung bei geschlossenem Deckel unter einer Vorspannung in der Ladestation bzw. in den Ladestationen gehalten sein. Die Vorspannung kann bewirken, dass beim Öffnen des Deckels des Werkzeugkoffers ein Werkzeug im Sinne einer Aushebebewegung in der Ladestation um einen gewissen Betrag bewegt wird. Es kann in eine Entnahmebereitschaftsstellung, bei der bevorzugt keine elektrische Verbindung mehr gegeben ist, bewegt sein.

Gleichfalls durch ein Ereignis gesteuert, wie bspw. ein Öffnen des Werkzeugkoffers, kann über die koffereigene Bedien- und Anzeigeeinheit und/oder über das Kommunikationsgerät dem Benutzer eine Nachricht gegeben werden. Insbesondere kann dem Benutzer eine kofferspezifische Nachricht wie etwa darüber übermittelt werden, welche Handwerkzeuge in dem Werkzeugkoffer vorhanden sind, welche Verbrauchsmaterialien vorhanden sind bzw. neu beschafft werden sollten oder ob bspw. ein Werkzeug einen wesentlichen Verschleiß aufweist oder dergleichen. Darüber hinaus kann dem Benutzer eine Information über den Ladezustand der einzelnen Akkumulatoren gegeben werden. Unabhängig hiervon können dem Benutzer, ggf. in gleicher Weise ereignisgesteuert, mit dem spezifischen Zustand des Werkzeugkoffers oder der Handwerkzeuge nicht verbundene Informationen, wie bspw. in einfachster Weise eine Begrüßung, übermittelt werden. Ein Akkumulator und/oder ein Werkzeug, ggf. mit einem mit diesem verbundenen Akkumulator, ist bevorzugt in einer Halterungsaufnahme des Werkzeugkoffers aufnehmbar und halterbar. Hierbei ist bevorzugt in der Halterungsaufnahme sogleich eine elektrische Verbindung zu Ladekontakten des Werkzeugs bzw. des Akkumulators vorgesehen. Mittels einer Ladestation kann bspw. die Transformierung einer Netzspannung in eine Ladespannung vorgenommen werden und/oder die Höhe des Ladestromes eingestellt werden und/oder an einen bestimmten Akkumulator angepasst werden. Eine Ladestation kann mehrere Halterungsaufnahmen versorgen. Es können mehrere Ladestationen vorgesehen sein.

Bevorzugt weist die Ladestation lediglich eine Stromversorgung auf, mit der einem Werkzeug Strom mit einer festgelegten Spannung (Ladespannung) zuführbar ist. Zweckmäßigerweise weist jedes Werkzeug ein eigenes Ladegerät zur Einstellung und Steuerung des Ladevorgangs auf. Es ist möglich, dass die den einzelnen Ladestationen zugeordneten Ladespannungen unterschiedlich sind bzw. in den verschiedenen Ladestationen unterschiedliche Ladespannungen bereitgestellt sind. Gemäß einer Ausführungsform weist der Koffer eine Auswerteeinheit auf, mit welcher Auswerteeinheit die Benutzungshäufigkeit eines Werkzeugs bzw. der Werkzeuge erfassbar und/oder Bewegungen des Koffers und/oder von Teilen des Koffers detektierbar sind. Bevorzugt sendet die Auswerteeinheit ein Steuersignal an das Ladegerät des Werkzeugs und/oder die Ladegeräte der Werkzeuge, wobei das Werkzeug bzw. die Werkzeuge in Abhängigkeit des empfangenen Steuersignals die Ladezeit einstellen.

Nachstehend ist die Erfindung des Weiteren anhand der beigefügten Zeichnung, die jedoch lediglich ein Ausführungsbeispiel darstellt, erläutert. Hierbei zeigt:
- Fig. 1: einen Werkzeugkoffer in geschlossenem Zustand;

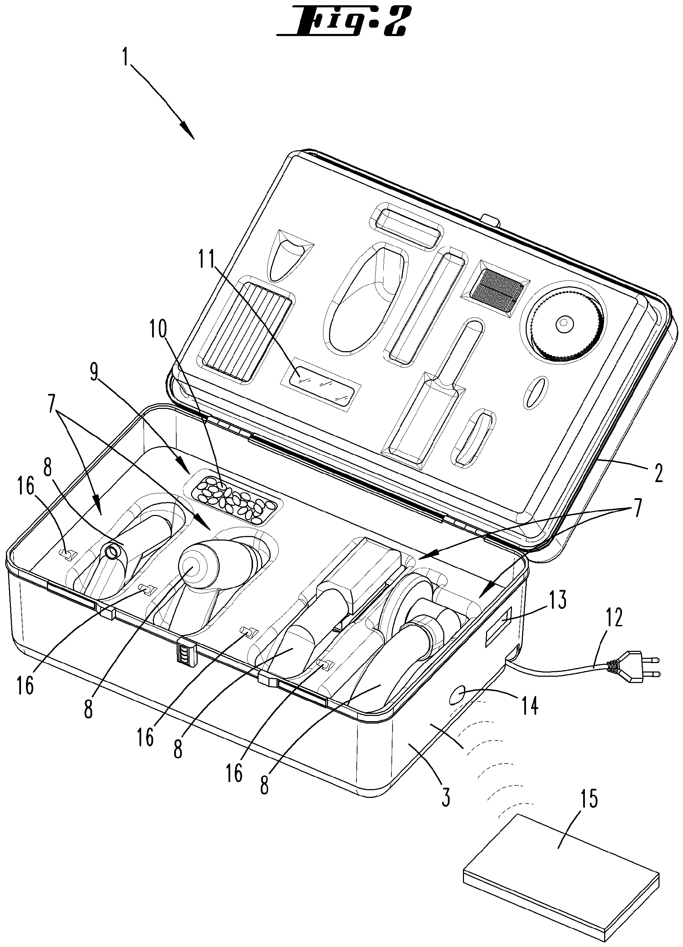

- Fig. 2: den Werkzeugkoffer gemäß Figur 1 in geöffnetem Zustand.

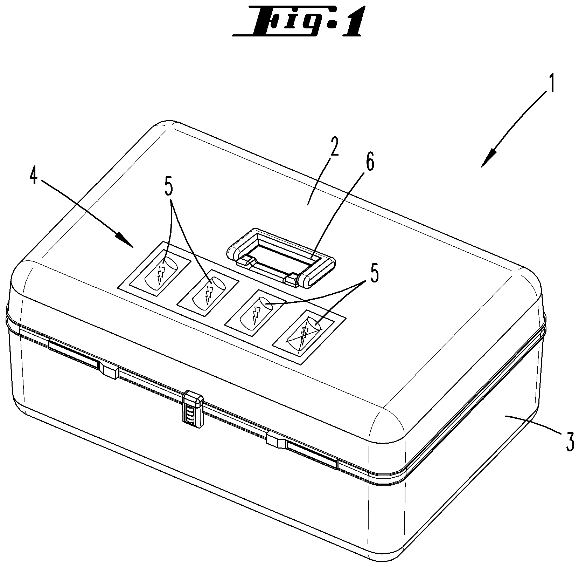

Dargestellt und beschrieben ist ein Werkzeugkoffer 1 mit einem Kofferdeckel 2 und einem Kofferunterteil 3. Der Werkzeugkoffer 1 weist einen rechteckigen Grundriss auf mit zwei gegenüberliegenden Breitflächen (auf der unteren Breitfläche liegt der Werkzeugkoffer wie in Figur 1 dargestellt auf) und vier Schmalflächen.

Beim Ausführungsbeispiel ist auf dem Kofferdeckel 2 eine koffereigene Bedien- und Anzeigeeinheit 4 ausgebildet. Die Bedien- und Anzeigeeinheit 4 kann einzelne Anzeigefelder 5 aufweisen, auf denen bestimmte Informationen, etwa zum Ladezustand eines Handwerkzeugs 8 und/oder zum Vorhandensein eines Handwerkzeugs 8 und/oder zum Vorhandensein von Verbrauchsmaterial 10 aufgeführt sein können.

Der Werkzeugkoffer 1 kann einen Griff 6 aufweisen.

Im geöffneten Zustand ist zu erkennen, dass der Werkzeugkoffer 1 mehrere, beim Ausführungsbeispiel vier Halterungsaufnahmen 7 für Handwerkzeuge 8 aufweist. Die Handwerkzeuge 8 sind beim Ausführungsbeispiel bevorzugt unmittelbar mit einem Akkumulator ausgestattet. In den Halterungsaufnahmen 7 kann jeweils eine Aufladung eines Akkumulators erfolgen.

Weiter kann eine Aufnahme 9 für Materialien 10 wie etwa Nägel, Kunststoffstangen für Heißklebepistolen, Heftklammern oder dergleichen vorgesehen sein. Dieser Aufnahme 9 kann eine Kamera 11, bevorzugt im Kofferdeckel 2 angeordnet, zugeordnet sein, die im geschlossenen Zustand des Werkzeugkoffers 1 eine Überprüfung hinsichtlich Anzahl etc. vornehmen kann. Es können auch mehrere Kameras 11 oder Kamera-CCD-Zeilen 11, etwa zugeordnet einzelnen Abteilen der Aufnahme 9, vorgesehen sein. Über einen Netzstecker 12 kann der Werkzeugkoffer 1 an ein elektrisches Netz etwa zur Durchführung von Ladevorgängen, angeschlossen werden. Der Werkzeugkoffer 1 kann eine (erste) Kommunikationsschnittstelle in Form einer USB-Schnittstelle 13 aufweisen.

Weiter kann der Werkzeugkoffer 1 als ggf. zweite, weitere Kommunikationsschnittstelle eine Funkschnittstelle 14 aufweisen. Er kann hierüber mit einem von dem Werkzeugkoffer 1 trennbaren Kommunikationsgerät 15 in Verbindung treten. Es kann sich bspw. um ein Smartphone, Tablet-Computer oder dergleichen handeln. Das Kommunikationsgerät 15 kann aber auch unter Nutzung der USB-Schnittstelle 13 bspw. mit dem Werkzeugkoffer 1 leitungsverbunden sein.

Für das Kommunikationsgerät 15 kann in dem Werkzeugkoffer 1 eine eigene Aufnahme vorgesehen sein, über welche es mit transportiert werden kann. Diese Aufnahme kann auch einen Ladevorgang eines ggf. in dem Kommunikationsgerät 15 enthaltenen Akkumulators ermöglichen.

Der Werkzeugkoffer 1 kann, beim Ausführungsbeispiel zugeordnet jeder Ladestation, einen Schalter 16 aufweisen, mit dem auch, durch einen Benutzer handbetätigt, durch Schalterumlegung oder Schalterbetätigung, bspw. zwischen einer Schnellladung und einer Standardladung gewechselt werden kann oder überhaupt eine Ladung des Handwerkzeuges 8, oder mehrerer oder aller Handwerkzeuge 8, geschaltet werden kann.

Der Schalter 16 kann auch durch eine bestimmte Handhabung des Werkzeugkoffers 1 betätigbar sein. Beispielsweise durch ein Öffnen des Kofferdeckels 2. Der Nutzer betätigt den Schalter 16 so mittelbar durch die Handhabung des Werkzeugkoffers 1. Insbesondere in letzterem Zusammenhang kann der Schalter 16 als solcher auch für den Nutzer nicht sichtbar ausgebildet sein. Beispielsweise durch einen aufhebbaren Kontakt in einem Schloss oder Verschluss des Werkzeugkoffers 1 oder in einem Gelenk zwischen dem Kofferunterteil 3 und dem Kofferdeckel 2.

### Bezugszeichenliste:

- 1: Werkzeugkoffer
- 2: Kofferdeckel
- 3: Kofferunterteil
- 4: Bedien-/Anzeigeeinheit
- 5: Anzeigefelder
- 6: Griff
- 7: Halterungsaufnahme
- 8: Handwerkzeug
- 9: Aufnahme
- 10: Materialien
- 11: Kamera
- 12: Netzstecker
- 13: USB-Schnittstelle
- 14: Funkschnittstelle
- 15: Kommunikationsgerät
- 16: Schalter

## Patentansprüche

1. Werkzeugkoffer (1) mit einem Kofferunterteil (3) und einem Kofferdeckel (2), wobei das Kofferunterteil (3) und/oder der Kofferdeckel (2) mindestens eine Halterungsaufnahme (7) für mindestens ein Handwerkzeug (8) aufweist, wobei der Werkzeugkoffer (1) mindestens eine Ladestation zur Ladung mindestens eines Akkumulators des Handwerkzeugs (8) aufweist,
**dadurch gekennzeichnet,**
**dass** die Ladestation eingerichtet ist, die Dauer des Ladevorgangs, d.h. die Ladezeit, des Akkumulators in Abhängigkeit einer Bewegung des Werkzeugkoffers (1) oder zumindest Teilen des Werkzeugkoffers (1) zu variieren, nämlich zwischen einer Schnellladung und einer Ladung mit Standardladezeit und gegebenenfalls einer Schon- und Erhaltungsladung.

2. Werkzeugkoffer (1) nach Anspruch 1, **dadurch gekennzeichnet, dass** der Werkzeugkoffer (1) mehrere Akkumulatoren aufweist und dass die Ladestation eingerichtet ist, einen Akkumulator zeitlich vorrangig zu laden.

3. Werkzeugkoffer (1) nach Anspruch 2, **gekennzeichnet durch** einen Schalter (16) zur Veranlassung eines vorrangigen Ladevorgangs eines Akkumulators.

4. Werkzeugkoffer (1) nach Anspruch 3, **dadurch gekennzeichnet, dass** der Schalter (16) als solcher für den Nutzer nicht sichtbar ausgebildet ist.

5. Werkzeugkoffer nach einem der Ansprüche 3 oder 4, **dadurch gekennzeichnet, dass** der Schalter (16) durch eine bestimmte Handhabung des Werkzeugkoffers (1) betätigbar ist.

6. Werkzeugkoffer nach Anspruch 5, **dadurch gekennzeichnet, dass** der Schalter (16) durch ein Öffnen des Kofferdeckels (2) betätigbar ist.

7. Werkzeugkoffer (1) nach einem der Ansprüche 2 bis 6, **dadurch gekennzeichnet, dass** die Ladestation eingerichtet ist, eine zeitliche Rangfolge für die Ladevorgänge der an die Ladestation angeschlossenen Akkumulatoren in Abhängigkeit von gemessenen Ladezuständen herzustellen.

8. Werkzeugkoffer (1) nach einem der vorhergehenden Ansprüche, **gekennzeichnet durch** Mittel zur Messung des Ladezustandes eines Akkumulators.

9. Werkzeugkoffer (1) nach einem der vorhergehenden Ansprüche, **gekennzeichnet durch** Mittel zur Messung der räumlichen Lage des Werkzeugkoffers (1) und/oder zumindest eines Teils des Werkzeugkoffers.

10. Werkzeugkoffer (1) nach einem der vorhergehenden Ansprüche, **gekennzeichnet durch** eine Bedieneinheit und/oder eine Anzeigeeinheit (4).

11. Werkzeugkoffer (1) nach einem der vorhergehenden Ansprüche, **gekennzeichnet durch** eine Kommunikationsschnittstelle (13, 14).

12. Werkzeugkoffer (1) nach Anspruch 11, **dadurch gekennzeichnet, dass** die Kommunikationsschnittstelle (13, 14) eine kabelbezogene oder drahtlose Kommunikationsschnittstelle (13, 14), insbesondere eine Funkschnittstelle, ist.

13. Werkzeugkoffer (1) nach einem der Ansprüche 11 oder 12, **dadurch gekennzeichnet, dass** die Kommunikationsschnittstelle (13, 14) bidirektional ausgebildet ist.

14. Werkzeugkoffer (1) nach einem der vorhergehenden Ansprüche, **dadurch gekennzeichnet, dass** durch eine durch einen Bewegungssensor erfasste Bewegung des Werkzeugkoffers (1) die Schnellladung auslösbar ist.

15. Werkzeugkoffer nach einem der vorhergehenden Ansprüche, **dadurch gekennzeichnet, dass** durch Eintreten einer Ruhephase des Werkzeugkoffers (1) die Schnellladung in einen Ladevorgang mit Standardladezeit wandelbar ist.

## Claims

1. Toolbox (1) having a box bottom part (3) and a box lid (2), the box bottom part (3) and/or the box lid (2) comprising at least one retaining holder (7) for at least one hand tool (8), the toolbox (1) comprising at least one charging station for charging at least one accumulator of the hand tool (8),
**characterised in that**
the charging station is designed to vary the duration of the charging process, i.e. the charging time, of the accumulator depending on a movement of the toolbox (1) or at least parts of the toolbox (1), specifically between a rapid charge and a charge with a standard charging time and optionally a gentle and trickle charge.

2. Toolbox (1) according to claim 1, **characterised in that** the toolbox (1) comprises a plurality of accumulators and **in that** the charging station is designed to charge an accumulator with temporal priority.

3. Toolbox (1) according to claim 2, **characterised by** a switch (16) for prompting a prioritised charging process of an accumulator.

4. Toolbox (1) according to claim 3,
**characterised in that** the switch (16) is designed as a switch that is invisible to the user.

5. Toolbox according to either claim 3 or claim 4, **characterised in that** the switch (16) can be actuated by specific handling of the toolbox (1).

6. Toolbox according to claim 5, **characterised in that** the switch (16) can be actuated by the box lid (2) being opened.

7. Toolbox (1) according to any of claims 2 to 6, **characterised in that** the charging station is designed to produce a temporal order of priority for the charging processes of the accumulators connected to the charging station depending on the measured states of charge.

8. Toolbox (1) according to any of the preceding claims, **characterised by** means for measuring the state of charge of an accumulator.

9. Toolbox (1) according to any of the preceding claims, **characterised by** means for measuring the spatial position of the toolbox (1) and/or at least part of the toolbox.

10. Toolbox (1) according to any of the preceding claims, **characterised by** a control unit and/or a display unit (4).

11. Toolbox (1) according to any of the preceding claims, **characterised by** a communication interface (13, 14).

12. Toolbox (1) according to claim 11, **characterised in that** the communication interface (13, 14) is a cable-based or wireless communication interface (13, 14), in particular a radio interface.

13. Toolbox (1) according to either claim 11 or claim 12, **characterised in that** the communication interface (13, 14) is bidirectional.

14. Toolbox (1) according to any of the preceding claims, **characterised in that** the rapid charge can be initiated by a movement of the toolbox (1) that is detected by a movement sensor.

15. Toolbox according to any of the preceding claims, **characterised in that** the rapid charge can be converted into a charging process with a standard charging time as a result of the toolbox (1) entering a rest phase.

## Revendications

1. Coffre à outils (1) avec une partie inférieure de coffre (3) et un couvercle de coffre (2), la partie inférieure de coffre (3) et/ou le couvercle de coffre (2) présentant au moins un logement de maintien (7) pour au moins un outil à main (8), dans lequel le coffre à outils (1) est pourvu d'au moins une station de charge pour charger au moins une batterie de l'outil à main (8),
**caractérisé en ce que**
la station de charge est conçue pour faire varier la durée du processus de charge, c'est-à-dire le temps de charge, de la batterie en fonction d'un mouvement de la boîte à outils (1) ou au moins de parties de la boîte à outils (1), à savoir entre une charge rapide et une charge avec un temps de charge standard et, le cas échéant, une charge douce de maintenance.

2. Coffre à outils (1) selon la revendication 1, **caractérisé en ce que** le coffre à outils (1) comporte plusieurs batteries et **en ce que** la station de charge est configurée pour charger une batterie prioritairement dans le temps.

3. Boîte à outils (1) selon la revendication 2, **caractérisée par** un interrupteur (16) pour déclencher un processus de charge prioritaire d'une batterie.

4. Boîte à outils (1) selon la revendication 3, **caractérisée en ce que** l'interrupteur (16) en tant que tel n'est pas visible de l'utilisateur.

5. Coffre à outils selon l'une des revendications 3 ou 4, **caractérisé en ce que** l'interrupteur (16) est actionnable par une manipulation spécifique du coffre à outils (1).

6. Coffre à outils selon la revendication 5, **caractérisé en ce que** l'interrupteur (16) est actionnable par une ouverture du couvercle du coffre (2).

7. Coffre à outils (1) selon l'une des revendications 2 à 6, **caractérisé en ce que** la station de charge est agencée pour établir un ordre chronologique pour les processus de charge des batteries connectés à la station de charge en fonction des états de charge mesurés.

8. Coffre à outils (1) selon l'une des revendications précédentes, **caractérisé par** des moyens pour mesurer l'état de charge d'une batterie.

9. Coffre à outils (1) selon l'une des revendications précédentes, **caractérisé par** des moyens pour mesurer la position spatiale du coffre à outils (1) et/ou d'au moins une partie du coffre à outils.

10. Coffre à outils (1) selon l'une des revendications précédentes, **caractérisé par** une unité de commande et/ou une unité d'affichage (4).

11. Coffre à outils (1) selon l'une des revendications précédentes, **caractérisé par** une interface de communication (13, 14).

12. Coffre à outils (1) selon la revendication 11, **caractérisé en ce que** l'interface de communication (13, 14) est une interface de communication filaire ou sans fil (13, 14), en particulier une interface radio.

13. Coffre à outils (1) selon l'une des revendications 11 ou 12, **caractérisé en ce que** l'interface de communication (13, 14) est bidirectionnelle.

14. Coffre à outils (1) selon l'une des revendications précédentes, **caractérisé en ce que** la charge rapide peut être déclenchée par un mouvement du coffre à outils (1) détecté par un capteur de mouvement.

15. Coffre à outils selon l'une des revendications précédentes, **caractérisé en ce que**, par l'apparition d'une phase de repos du coffre à outils (1), la charge rapide peut être transformée en un processus de charge avec un temps de charge standard.
